# EUROPÄISCHE PATENTANMELDUNG

(11) **EP 0 586 333 A2**
(43) Veröffentlichungstag der Anmeldung: **09.03.1994**
(21) Anmeldenummer: 93810557.4
(22) Anmeldetag: 06.08.1993
(51) Int. Cl.: G07B 17/02

(54) **Vorrichtung für die Eingabesteuerung einer elektronischen Frankiermaschine**

(30) Priorität: 04.09.1992 CH 2795/92
(71) Anmelder: FRAMA AG, CH-3438 Lauperswil (CH)
(72) Erfinder: Haug, Werner, CH-3550 Langnau (CH)
(74) Vertreter: Quehl, Horst Max, Dipl.-Ing.

(57) **Zusammenfassung**

Die Vorrichtung zur Eingabesteuerung einer elektronisch gesteuerten Frankiermaschine hat einen Posttarifinformationen enthaltenden, programmierbaren Datenspeicher sowie einen typspezifischen Datenspeicher, der die vom Aufbau des Tarifsystems bestimmte Funktion von Eingabetasten (4) einer Eingabetafel (keyboard) (1) bestimmt. Die nach Posttarif möglichen Frankierwerte sind in Adressfeldern von Adressen des programmierbaren Datenspeichers vorgesehen, wobei zur Bestimmung von Frankierwerten und zur Erzeugung von entsprechenden Steuersignalen für die Einstellung von Mitteln zur graphischen Gestaltung des Frankierwertes die Adressen und Adressfelder durch Eingabetasten anwählbar sind. Den Adressen sind tastenspezifische Ordnungsziffern zugeordnet, wobei die Ordnungsziffern verschiedener Eingabetasten (4) zu einer resultierenden Ordnungsziffer addierbar sind. Die vom Gewicht des zum Postversand vorgesehenen Artikels bestimmten Frankierwerte, d.h. ihre Adressfelder, sind jeweils durch eine einzelne Eingabetaste (4) anwählbar, indem diese für Gewichtsbereiche (CH: -50 g,-100 g,-250 g,-400 g, -500g) vorgesehen sind. Diese Art der Funktionsbestimmung von Eingabetasten und die vorverarbeitete Speicherung der Frankierwerte führt zur Vereinfachung der Bedienung der Vorrichtung beim Frankieren und zur Vereinfachung der Neuprogrammierung des die Posttarifinformationen enthaltenden Datenspeichers. Ausserdem ist durch Auswechseln des typspezifischen Datenspeichers und Auswechseln von Tastenbeschriftungen dieselbe Vorrichtung an Postarifsysteme verschiedener Länder leicht anpassbar.

## Beschreibung

Die Erfindung betrifft eine Vorrichtung für die Eingabesteuerung einer elektronisch gesteuerten Frankiermaschine, mit einer Zentraleinheit (CPU), die über ein Interface mit einer Zentraleinheit der Frankiermaschine verbunden ist, mit einem Posttarifinformationen enthaltenden Datenspeicher der Zentraleinheit und mit Eingabemitteln für die Eingabe von Gewichtswerten sowie von Informationen betreffend Versandart und Versandziel des zu frankierenden Versandartikels, so dass der Frankierwert durch die Zentraleinheit bestimmbar ist und entsprechende Befehlssignale gebildet werden, die der Einstellung der Mittel zur graphischen Darstellung des Frankierwertes auf dem Versandartikel dienen.

Vorrichtungen dieser Art sind bekannt durch die US-A-4,180,856 und die EP-A-0 387 202 (FRAMA-Patent). Die in der US-A-4,180,856 beschriebene Vorrichtung hat als Eingabemittel für den Gewichtswert des zu frankierenden Artikels eine elektronische Waage. Die Vorrichtung nach der EP-A-0 387 202 ist Bestandteil einer Frankiermaschine, und sie ermöglicht die Eingabe von Gewichtswerten mittels einer Dezimaltastatur. Aufgrund der Gewichtseingabe und der Eingabe besonderer Versandarten sowie eines Versandzieles kann die Zentraleinheit dieser bekannten Vorrichtungen den Frankierwert bestimmen. Der für die Berechnung erforderliche Posttarif ist in einem Datenspeicher (PROM) der Zentraleinheit enthalten. Bei Aenderung des Posttarifs ist es erforderlich, diesen Datenspeicher auszutauschen. Eine Anpassung an einen geänderten Posttarif durch Einprogrammieren wäre aufgrund der Menge der in einem Posttarif enthaltenen Daten den zahlreichen Benutzern von Frankiermaschinen nicht zumutbar. Die hohe Datenmenge ergibt sich aufgrund der schematischen Abspeicherung der gesamten Posttariftabellen, mit deren Verkettung durch zugehörige Pointertabellen, die bestimmen, wie die verschiedenen Tariftabellen kombiniert werden können. Ein weiterer Nachteil besteht darin, dass die bekannten Vorrichtungen für jedes Land auf andere Weise technisch der landesspezifischen Gestaltung des Posttarifs angepasst sein müssen, so dass auch die Anordnung und Auswahl der Eingabetasten weitgehend verschiedenartig ist.

Eine Vorrichtung entsprechend der EP-A-0 387 202 ermöglicht es zwar, einen Gewichtswert mittels weniger Tasten einzugeben, jedoch müssen hierbei mehrere Tasten entsprechend der Anzahl der Dezimalstellen des Gewichtswertes betätigt werden.

Der Erfindung liegt die Aufgabe zugrunde, eine Vorrichtung der eingangs genannten Art zu finden, die einfach aufgebaut ist und sich besonders einfach und damit zeitsparend bedienen lässt. Ausserdem soll sie auf einfache Weise so ausführbar sein, dass sie sich durch den Benutzer an einen geänderten Posttarif anpassen lässt. Weiterhin soll auf technisch einfache Weise eine Anpassung an den Tarifaufbau eines anderen Landes möglich sein, so dass derselbe Vorrichtungstyp weltweit anwendbar ist. Insbesondere soll auch die Voraussetzung für eine vereinfachte Bedienung der Vorrichtung bei der manuellen Gewichtseingabe geschaffen werden. Die Lösung dieser Aufgabe erfolgt erfindungsgemäss dadurch, dass einigen der Eingabemittel Ordnungsziffern zugeordnet sind, für die Auswahl von durch sie charakerisierter Adressen der Adresstabelle eines Datenspeichers der Zentraleinheit (CPU), wobei an den Adressen jeweils eine Gruppe von posttarifgemässen Frankierwerten und an bestimmten Adressen ausserdem hinzuaddierbare Tarifzuschläge in Adressfeldern abgespeichert sind, die für eine Versandart oder ein Versandziel möglich sind und wobei den Adressfeldern für Frankierwerte und für Tarifzuschläge Eingabemittel zugeordnet sind, durch die ihre Werte für eine Frankierwerteinstellung auswählbar sind.

Diese Art der Abspeicherung von Frankierwerten mittels Ordnungsziffern anstatt in schematischer,linearer Ordnung, führt u.a. auch zu einer bedeuteten Einsparung an Speicherplatz im Datenspeicher und zu einer grossen Vereinfachung bei Anpassung an einen geänderten Posttarif. Für die Abspeicherung z.B. des schwedischen Posttarifs wäre nach üblicher Schematik die Abspeicherung von 12.000 Zahlen erforderlich. Aufgrund der Erfindung kann hingegen die zum Neuprogrammieren einzugebende Zahlenmenge auf 450 Zahlen reduziert werden.

Ein besseres Verständnis der Erfindung ergibt sich durch die folgende Beschreibung anhand der Zeichnungen. Es zeigt:
- Fig.1: eine Eingabetafel (keyboard) ohne länderspezifische Tastenbelegung und Beschriftung,
- Fig.2: eine Tabelle der grundsätzlich möglichen funktionellen Belegung der Eingabetasten der Eingabetafel nach Fig.1,
- Fig.3: eine Tabelle mit Angaben betreffend die länderspezifischen Belegungen der Tasten der Eingabetafel nach Fig.1,
- Fig.4: eine Eingabetafel (keyboard) mit einer für die Schweiz gültigen Tastenbelegung und Tastenbeschriftung,

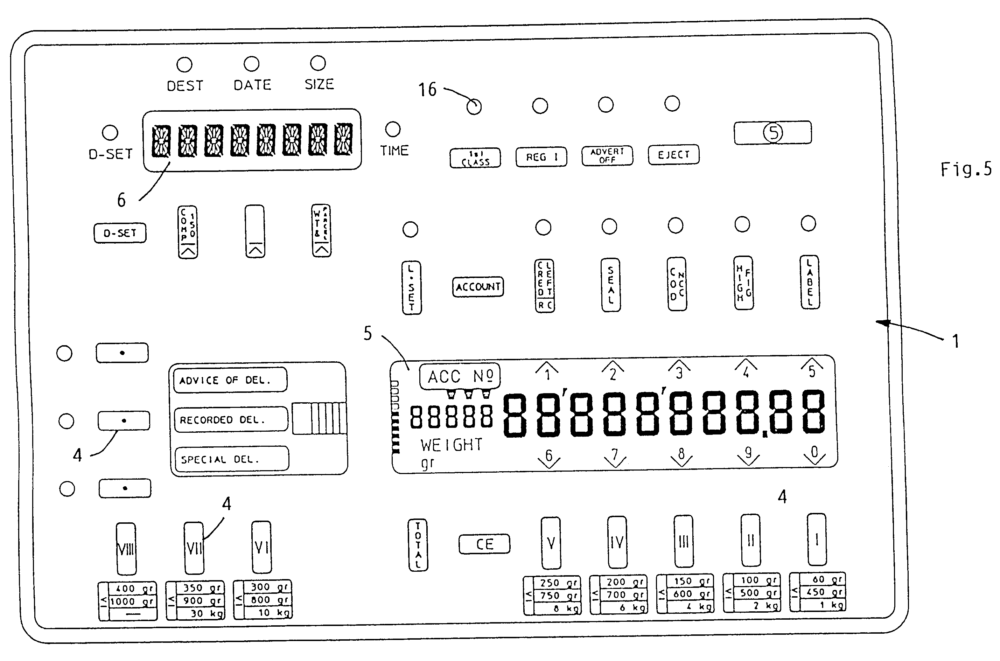

- Fig.5: eine Eingabetafel (keyboard) mit einer für Grossbritannien gültigen Tastenbelegung und Tastenbeschriftung,
- Fig.6: eine Adresstabelle der für die Schweiz gültigen Frankierwerte mit der Zuordnung von Adressen zu resultierenden Ordnungsziffern,
- Fig.7: ein Blockschema einer Zentraleinheit (CPU), mit elektro nischen Elementen einer mit der erfindungsgemässen Vorrichtung ausgerüsteten Frankiermaschine,
- Fig.8: ein Blockschema der der Eingabetafel der erfindungsgemässen Vorrichtung zugeordneten elektronischen Elemente,
- Fig.9: einen Programmablaufplan des allgemeinen Programmablaufs bei der Betätigung einer Eingabetaste der erfindungsgemässen Vorrichtung,
- Fig.10: Programmablaufpläne bei der Betätigung spezifischer Eingabetasten,
- Fig.11: einen Programmablaufplan der Druckkopfeinstellung der Frankiermaschine und
- Fig.12: einen Programmablaufplan für die Neuprogrammierung bei der Aenderung des Posttarifs.

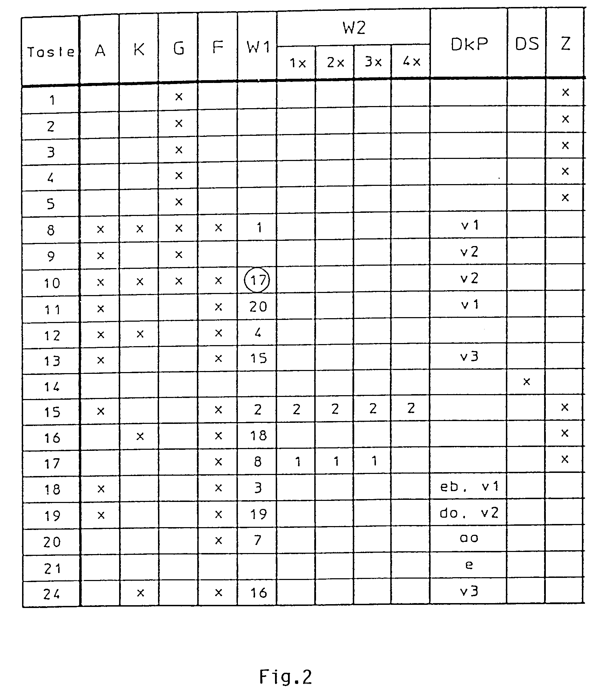

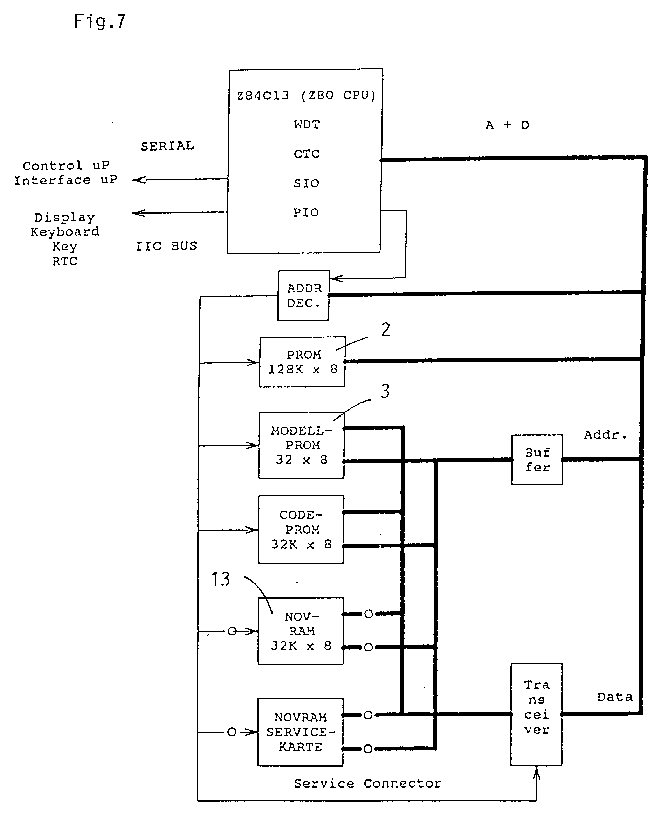

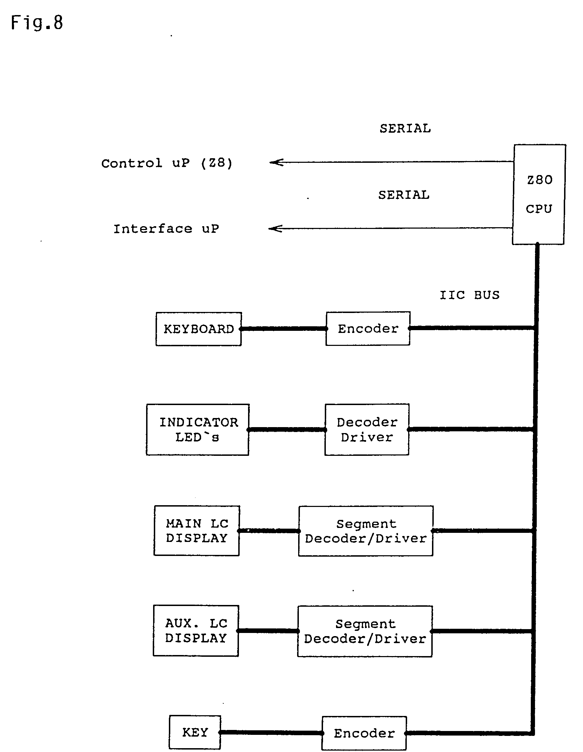

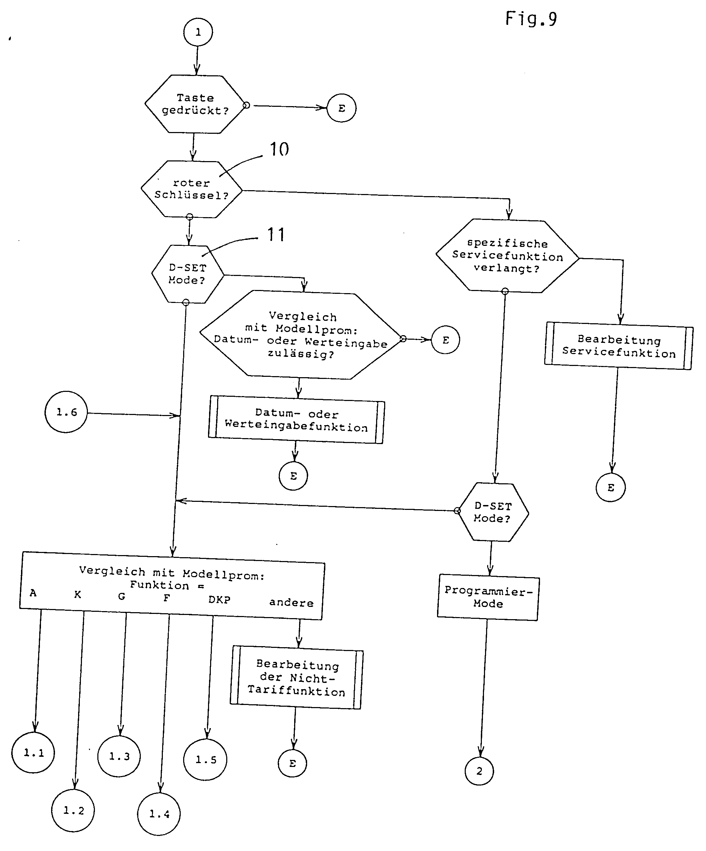

Ein wesentlicher Vorteil der erfindungsgemässen Vorrichtung besteht darin, dass neben dem in den Fig.7 und 8 dargestellten elektronischen Grundaufbau auch die Eingabetafel 1 für jede erfindungsgemässe Vorrichtung oder für jede mit dieser ausgerüsteten Frankiermaschine identisch ausgeführt sein kann, so dass derselbe Vorrichtungs- bzw. Maschinentyp trotz der länderspezifisch verschieden zusammengesetzten Posttarife für jedes Land verwendbar ist. Fig.2 zeigt tabellarisch die entsprechend einem Hauptprogramm grundsätzliche Festlegung für mögliche Tastenbelegungen. Dieses Hauptprogramm, dessen Programmablauf in den Fig.9 bis 12 dargestellt ist, befindet sich fest gespeichert in einem Hauptspeicher (PROM) 2 (Fig.7) der Zentraleinheit (CPU) der Frankiermaschine oder in einer erfindungsgemässen Vorrichtung, die über ein Interface mit einer Frankiermaschine verbunden ist.

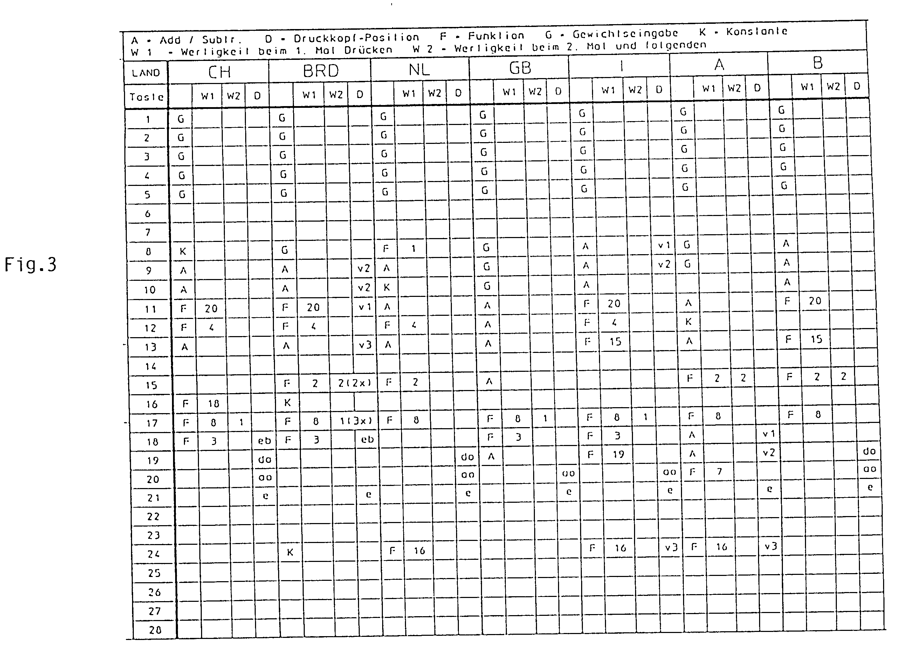

Die Auswahl der länderspezifischen Tastenbelegungen ist in einem weiteren, als Modellprom bezeichneten Speicher 3 festgelegt. Fig.3 zeigt tabellarisch beispielhaft für einige Länder die gültige, in jeweils einem Modellprom 3 festgelegte Tastenbelegung. Für eine länderspezifische Anpassung der Vorrichtung oder der Frankiermaschine ist somit lediglich dieses Modellprom 3 vorzusehen, das hierzu leicht austauschbar ausgeführt ist. Die entsprechend erforderliche Anpassung der die Tastenfunktion angebenden Beschriftungen auf der Eingabetafel kann durch Klebeetiketten auf einfache Weise erfolgen, ebenso um beispielsweise Anpassungen an eine geänderte Struktur eines Posttarifs vorzunehmen, insbesondere bei Aenderung der tarifgemässen Gewichtsstufen der zu frankierenden Versandartikel.

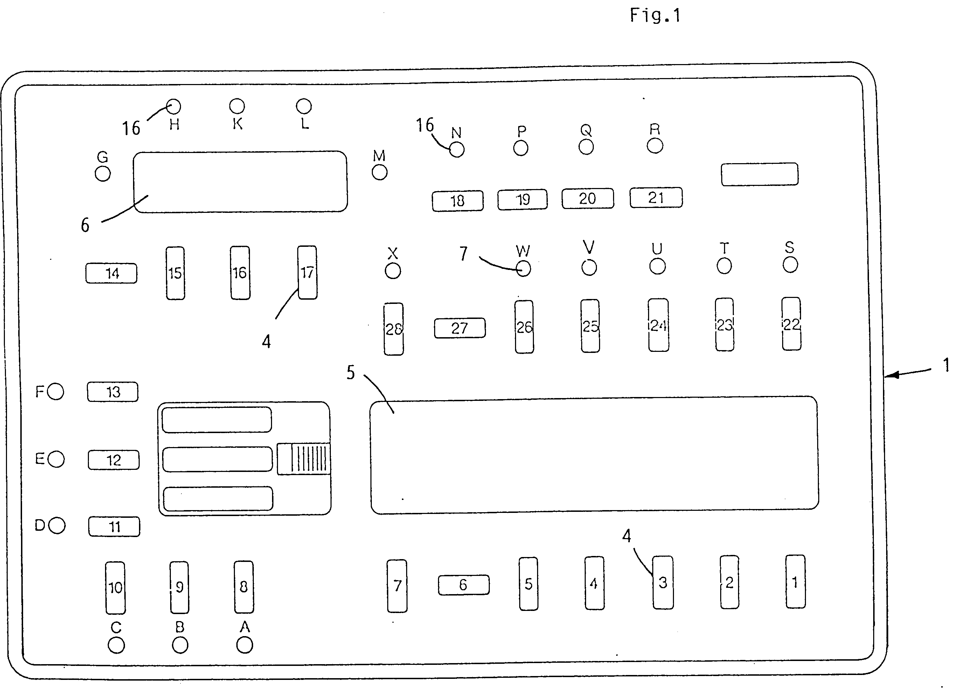

Die Fig.1 zeigt ein Beispiel für die für alle Länder geeignete, allgemeine Gestaltung der Eingabetafel. Entsprechend sind in Fig.1 die als rechteckförmige Tasten 4 ausgeführten Eingabemittel mit fortlaufenden Zahlen "1 bis 28" bezeichnet. Um den Betätigungs- bzw. Eingabezustand ("ja", "nein") von Eingabetasten 4 anzuzeigen, insbesondere wenn deren Eingabe nicht sofort auf einem der Anzeigefelder 5,6 der Eingabetafel 1 angezeigt wird, ist neben zahlreichen Tasten 4 jeweils eine kreisförmige Leuchtdiode 7 angeordnet. Eine erneute Betätigung solcher Eingabetasten bewirkt, dass die vorherige Eingabe gelöscht wird, bzw. dass der entsprechende Betrag subtrahiert wird.

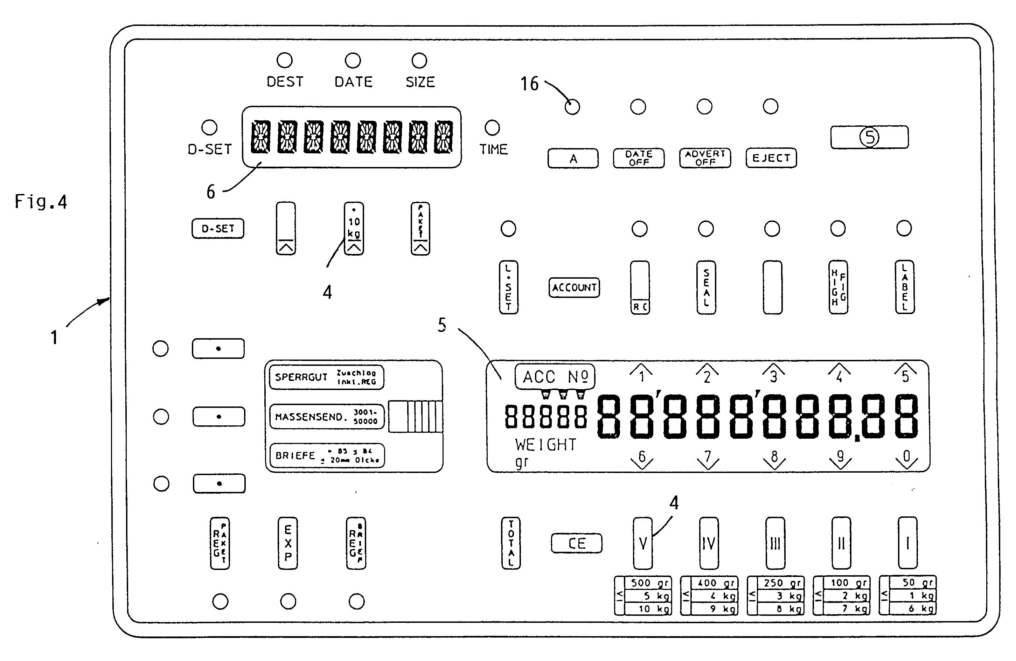

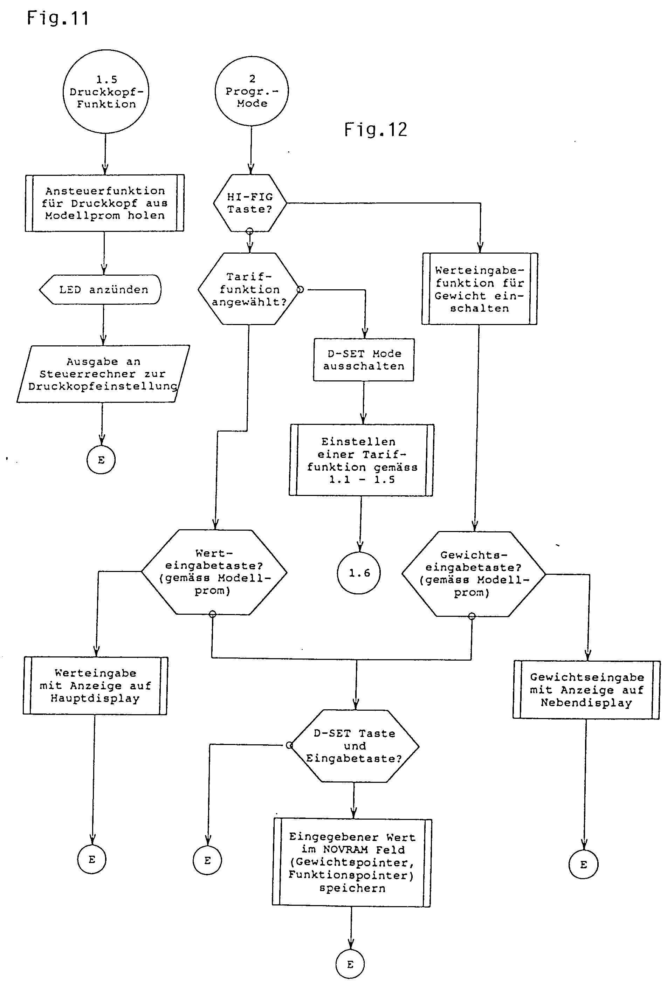

Ein wesentlicher und grundsätzlicher Unterschied zu bekannten Vorrichtungen besteht im Fehlen von speziellen Eingabetasten für die numerische Eingabe eines Frankierwertes oder eines Gewichtswertes. Stattdessen sind einzelne Eingabetasten (I-V in Fig.3 oder I-VIII in Fig.4) vorhanden, die für Gewichtsbereiche vorgesehen sind bzw. die dem Endwert eines Gewichtsbereiches entsprechen. Folglich kann ein einzelner Tastendruck auf eine dieser Eingabetasten ausreichen, um einen dem Gewichtsbereich entsprechenden Frankierwert für die Frankierung eines Versandartikels bereitzustellen. Aufgrund dieses Unterschiedes sind auch die elektronischen Einrichtungen der erfindungsgemässen Vorrichtung einfacher und nach neuem Prinzip zusammengesetzt. Da folglich auch eine wesentlich geringere Anzahl der für eine Frankierwerteinstellung abzurufenden elektronischen Daten ausreicht, kann auch das Umprogrammieren der gespeicherten Daten bei Aenderung des Posttarifs einfach und durch den Benutzer der Vorrichtung mit geringem Zeitaufwand selbst ausgeführt werden, wie es in Fig.12 durch einen Programmablaufplan veranschaulicht ist.

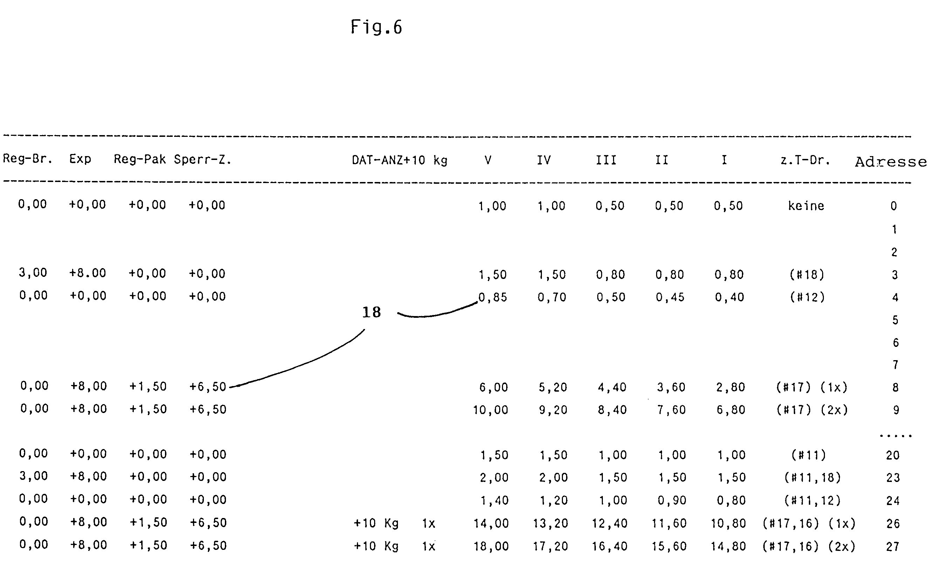

Fig.6 zeigt ein für die Schweiz gegenwärtig gültiges System der Einordnung von Frankierwerten für einen programmierbaren Datenspeicher. Die tarifgemäss möglichen Frankierwerte sind an verschiedenen Adressen gespeichert, die verschiedenen Gewichtsbereichen I-V zugehörige Frankierwerte und zu diesen hinzuaddierbare Zuschlagwerte enthalten. In der tabellarischen Darstellung der Fig.6 entspricht der Inhalt der einzelnen Adressen einer Tabellenzeile. Die Auswahl einzelner Frankierwerte aus einem Adressfeld einer Adresse erfolgt beispielsweise durch Betätigung der Eingabetasten für die Gewichtsbereiche, die in der Tastenbelegungstabelle nach Fig.2 oder 3 mit "G" bezeichnet sind und wahlweise auch durch zusätzliches Betätigen der Eingabetasten für Zuschlagwerte "A" (Fig.2 und 3), die durch den Rechner der Zentraleinheit (CPU) zu dem dem Gewichtsbereich entsprechenden Frankierwert hinzuaddiert werden. Es kann jedoch durch eine Eingabetaste auch ein an bestimmten Adressen vorgesehener konstanter Frankierwert "K" eingegeben werden, für den somit keine Gewichtseingabe vorgesehen ist.

Die in den Tabellen nach Fig.2 und 3 mit "K" bezeichneten Eingabetasten dienen der Eingabe von Einheitswerten der Frankierung, wie z.B. eines einheitlichen Frankierwertes für eingeschriebene Schweizer Briefe, der somit sich von einem Zuschlagwert "A" unterscheidet. Die hierfür verwendete Eingabetaste mit der Nummer "8" (Fig.1) hat entsprechend in Fig.4 die Beschriftung "REG Brief". In der Addressentabelle nach Fig.6 ist der entsprechende Frankierwert mit Fr. 3,- angegeben. Da dieser Frankierwert gemäss Schweizer Posttarif für Briefe bis zu einem Gewicht von 500 g und ein Format bis B4 gültig ist, muss für die Frankierwertbereitstellung somit nur diese Taste "8" gedrückt werden, d.h eine zusätzliche Betätigung einer Taste "G" (I-V) für einen Gewichtsbereich ist nicht erforderlich.

Die Auswahl der für eine Frankierwertbestimmung anzuwählenden Adressen, abweichend von einer ersten Adresse mit der Ordnungsziffer Null, erfolgt durch besondere Eingabetasten, die in den Tabellen für die Tastenbelegung nach Fig.2 und 3 mit "F" bezeichnet sind. Diesen Eingabetasten "F" sind gemäss den tabellarischen Darstellungen der Fig.2 und 3 Ordnungsziffern "W1, W2" zugeordnet. Mittels dieser Eingabetasten "F" und deren Ordnungsziffern werden bestimmte Versandkategorien des Posttarifs gewählt, wie z.B. für Paketversand im Unterschied zu Briefversand, für Drucksachen oder bestimmte Versandzonen, da diese Versandkategorien eigene, in Gewichtsbereiche eingeteilte Frankierwerte bestimmen und keine Zuschlagwerte oder Einheitswerte sind. Bei einmaligem Betätigen der Eingabetasten "F" wird eine erste Ordnungsziffer eingeben, deren Wert in den Tabellen nach Fig.2 und 3 in der Spalte "W1" angegeben ist. Nach nochmaligem Betätigen einer Eingabetaste "F" für Ordnungsziffern wird eine zweite, in den Tabellen angegebene Ordnungsziffer "W2" zu der ersteren (W1) hinzuaddiert, und die resultierende Ordnungsziffer kennzeichnet die Adresse, in der die massgeblichen Frankierwerte enthalten sind. Wie den Tabellen nach Fig.2 und 3zu entnehmen ist, können z.B. die Tasten "15" und "17" für bestimmte Länder mehrmals betätigt werden, um entsprechend verschiedene Adressen nach Fig. 6 auszuwählen.

In der Spalte "z.T-Dr." der Tabelle nach Fig.6 sind die Tastennummern angegeben, durch die die betreffende Adresse erhalten wird. Die den Spalten dieser Tabelle nach Fig.6 zugeordneten Bezeichnungen geben Eingabetasten an, die in der Eingabetafel nach Fig.4 entsprechend bezeichnet sind. Durch diese Eingabetasten werden somit die Adressfelder 18 bzw. deren Frankierwerte oder deren Zuschlagwerte angewählt. Es bedeuten:
- I - V: Eingabetasten für Gewichtsbereiche
- Reg-Br.: eingeschriebener Brief
- Exp: Eilsendung
- Reg-Pak: eingeschriebener Brief
- Sperr-Z.: Zuschlag für Sperrgut
- DAT-ANZ+10 kg: Im Nebenanzeigefeld, das auch der Datumsanzeige dient erscheint die Angabe +10 kg, entsprechend dem Gewichtswert, der dem durch Eingabetasten I-V eingegebenen Gewichtsbereich hinzuaddiert wird.

Beispielsweise bewirkt einmaliges Drücken der Taste Nr. 17, die auf der Eingabetafel 1 die Bezeichnung "Paket" trägt, die Auswahl der Adresse mit der Ordnungsziffer "8" und nochmaliges Drücken diejenige mit der Ordnungsziffer 9. Die Betätigung dieser Taste Nr. 17 erfolgt, wenn das Gewicht des zu frankierenden Artikels in einem der Bereiche liegt, die in der zweiten oder dritten Zeile der Beschriftungen 15 der Eingabetasten I - V nach Fig.4 angegeben sind. Somit kostet entsprechend der tabellarischen Darstellung der Fig.6 in der Schweiz ein Paket im Gewichtsbereich bis 5 kg Fr. 6,- oder im Gewichtsbereich bis 9 kg Fr. 9,20. Für letzeren Frankierwert musste zuerst die Taste Nr. 17 zweimal gedrückt werden, um an die Adresse mit der Ornungsziffer "9" zu gelangen und anschliessend die Taste "IV", um den Adressplatz mit dem diesem Gewicht zugehörigen diesem Frankierwert zu erhalten.

Um im Gewichtsbereich für Briefe (bis 500 g) einen Versand als beschleunigte A-Post zu erreichen, wird die Taste Nr. 18 mit der Bezeichnung "A" nach Fig. 4 gedrückt, so dass die neben ihr angeordnete Leuchtdiode 16 leuchtet. Diese Betätigung bedeutet einen Wechsel von der Adresse mit der Ordnungsziffer "0" auf diejenige mit der Ordnungsziffer "3". Ein Drücken der Taste "III" betreffend den Gewichtsbereich bis 250 g führt zur Anwahl des Adressfeldes mit dem Frankierwert Fr. 0,80. Ein nochmaliges dDrücken der Taste Nr.18 bewirkt ein Löschen der Leuchtdiode 16. wird anschliessend die Taste "III" (Fig.4) gedrückt, so erscheint in der Hauptanzeige 5 der Frankierwert Fr. 0,50, der dem Versand als B-Post nach Schweizer Posttarif entspricht.

Die Fig.9 bis 12 veranschaulichen den Programmablauf infolge der Betätigung bestimmter Eingabetasten 4 oder eines roten Schlüssels für die Neuprogrammierung der Frankierwerte, für den in der Eingabetafel 1 eine Schlüsselaufnahme 9 vorgesehen ist. Entsprechend dem allgemeinen Programmablauf wird nach dem Drücken einer Eingabetaste 4 an den Programmfeldern 10,11 zunächst überprüft, ob nicht der rote Schlüssel in der Schlüsselaufnahme 9 steckt oder ob eine Umschaltung auf eine grundsätzlich andere Eingabeart durch Drücken der "D-Set"-Taste erfolgt ist. Eine solche andere Eingabeart dient beispielsweise der Eingabe oder Korrektur des in dem kleineren Anzeigefeld 6 angezeigten Datums oder der numerischen Eingabe bei Neuprogrammierung der an den Feldern der Adressen nach Fig.6 enthaltenen Frankierwerte. In der Tabelle der Fig.2 sind die für diese Eingabe vorgesehenen Eingabetasten in der Spalte "Z" bezeichnet.

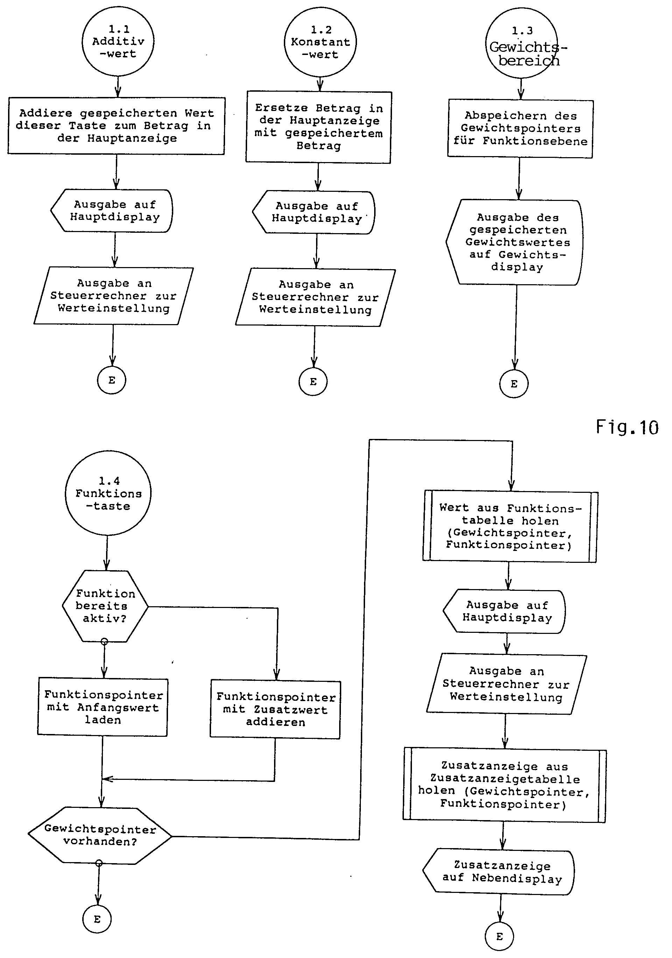

Anschliessend verläuft das Programm entsprechend Fig.10 aufgrund der Betätigung einer der verschiedenartigen Eingabetasten für einen Zuschlagwert "A", für einen Konstantwert "K", für eine Gewichtsbereich "G" oder für eine besondere Versandart und Bestimmung einer hierzu vorgesehenen Ordnungsziffer "F". Die Beschriftungen der Programmfelder erklären die jeweils ausgeführten Funktionen.

Die Darstellung der Fig.11 betrifft besondere Einstellungen des Druckkopfes, die an mindestens einem zusätzlichen Druckklischee vorgenommen werden. Diese Einstellungen sind in Fig.2 und 3 in der Spalte "D" angegeben und betreffen beispielsweise fakultative Abdrucke auf dem Versandartikel, d.h. auf einem Brief oder auf einem Paket o.dgl. und solche, die zusätzlich zu dem Frankierwertabdruck ausgeführt werden sollen.

Wurde der rote Schlüssel in die Schlüsselaufnahme 9 gesteckt und ausserdem die "D-Set"-Taste gedrückt, so kann gemäss Programmablaufplan nach Fig.9 und der Fortsetzung dieses Planes nach Fig. 12 die Neuprogrammierung von Frankierwerten in Anpassung an einen geänderten Posttarif erfolgen. Diese Aenderungen der Speicherwerte an den Adressen nach Fig.6 erfolgt in dem nichtflüchtigen Speicher (NOVRAM) 13 (Fig.7), in dem die Frankierwerte gespeichert sind. Die hierzu erforderlichen Zahleneingaben erfolgen mittels der unterhalb des grösseren Anzeigefeldes 5 angeordneten Eingabetasten "1 bis 5" und wie es in der Tastenbelegungstabelle nach Fig.2 festgelegt ist.

In Fig.7 und 8 sind die Eigenschaften der dargestellten elektronischen Elemente durch fachübliche englische Bezeichnungen und Kurzzeichen angegeben. Es bedeuten:
- Z80: Rechnerfamilie von ZILOG
- Z84C13: einen Rechnertyp aus dieser Familie
- WDT: Zeitüberwachung des Rechners
- CTC: Zähler und Zeitglieder des Rechners
- SIO: serielle Schnittstelle
- PIO: parallele Schnittstelle
- IIC BUS: Peripheriebussystem
- RTC: Quarzuhr
- ADDR DEC.: Adressen Decodierung für elektronische Elemente am Bus
- PROM: Programmspeicher
- NOVRAM: nichtflüchtiger Datenspeicher
- Buffer: Puffer, Verstärker (unidirektional)
- Transceiver: bidirectionaler Verstärker
- Control uP: Steuerrechner
- Interface uP: Interface-Rechner
- SERIAL: serielle Schnittstelle
- KEYBOARD: Eingabetafel
- Encoder: Codierer, Datenkonzentrator
- Decoder: Decodierer
- Driver: Treiber
- INDICATOR:
- LED's: Leuchtdioden
- MAIN DISPLAY: Hauptanzeigefeld (5)
- AUX. DISPLAY: Nebenanzeigefeld (6)
- CODE-PROM: einen Datenspeicher der Codewerte enthält für den verschlüsselten Datenaustausch mit dem Postamt, um einen Frankierwertspeicher aufzufüllen (vgl. CH-A-678 368)
- NOVRAM:
- SERVICE:
- KARTE: einen Datenspeicher mit für die vorliegende Erfindung unwesentlichen Sonderfunktionen

## Patentansprüche

1. Vorrichtung für die Eingabesteuerung einer elektronisch gesteuerten Frankiermaschine, mit einer Zentraleinheit (CPU), die über ein Interface mit einer Zentraleinheit der Frankiermaschine verbunden ist, mit einem Posttarifinformationen enthaltenden Datenspeicher (13) der Zentraleinheit und mit Eingabemitteln (4) für die Eingabe von Gewichtswerten sowie von Informationen betreffend Versandart und Versandziel des zu frankierenden Versandartikels, so dass der Frankierwert durch die Zentraleinheit bestimmbar ist und entsprechende Befehlssignale gebildet werden, die der Einstellung der Mittel zur graphischen Darstellung des Frankierwertes auf dem Versandartikel dienen, dadurch gekennzeichnet, dass einigen der Eingabemittel (Fig.2: Nr.: 8,10-13,15-20, 24) Ordnungsziffern (W₁,W₂) zugeordnet sind, für die Auswahl von durch sie charakterisierter Adressen der Adresstabelle (Fig. 6) eines Datenspeichers (13) der Zentraleinheit (CPU), wobei an den Adressen ("1-27") jeweils eine Gruppe von posttarifgemässen Frankierwerten und an bestimmten Adressen ausserdem hinzuaddierbare Tarifzuschläge in Adressfeldern abgespeichert sind, die für eine Versandart oder ein Versandziel möglich sind und wobei den Adressfeldern für Frankierwerte und für Tarifzuschläge Eingabemittel (I - V..) zugeordnet sind, durch die ihre Werte für eine Frankierwerteinstellung auswählbar sind.

2. Vorrichtung nach Anspruch 1, dadurch gekennzeichnet, dass die Eingabemittel in einer Eingabetafel (1) angeordnete Tasten (4) sind, wobei zusätzlich zu einem die Posttarifdaten enthaltenden Datenspeicher (13) ein die Funktion der Tasten und die Zuordnung von Ordnungsziffern zu den Tasten bestimmender Datenspeicher ("Modellprom", 3) vorhanden ist.

3. Vorrichtung nach Anspruch 1 oder 2, dadurch gekennzeichnet, dass die Ordnungsziffern verschiedener Eingabemittel (4) aufgrund der Programmierung der Zentraleinheit zu einer resultierenden Ordnungsziffer addierbar sind, wobei die resultierende Ordnungsziffer die für die Frankierung massgebliche Adresse des Datenspeichers (2) der Zentraleinheit bestimmt.

4. Vorrichtung nach Anspruch 3, dadurch gekennzeichnet, dass durch mindestens einige der Eingabemittel für Ordnungsziffern durch deren mehrmalige Aktivierung verschiedene, sich um einen festen Betrag addierende Ordnungsziffern eingebbar sind.

5. Vorrichtung nach einem der Ansprüche 1 bis 3, dadurch gekennzeichnet, dass Nullwertadressen vorhanden sind, die durch resultierende Ordnungsziffern angewählt werden, die sich aus einer dem Posttarif widersprechenden Folge von Betätigungen der Eingabemittel (4) ergeben.

6. Vorrichtung nach einem der Ansprüche 1 bis 5, dadurch gekennzeichnet, dass für die Eingabe von Gewichtswerten innerhalb eines Gewichtsbereiches (0-20g, 20-50g...) für jeden Gewichtsbereich nur eine Eingabetaste (4) vorgesehen ist, so dass ein einem Gewichtsbereich posttarifgemäss zugeordneter Frankierwert durch einmalige Betätigung der Eingabetaste eingebbar ist.

7. Vorrichtung nach Anspruch 6, dadurch gekennzeichnet, dass den Eingabetasten (Fig.4, I-V) für Gewichtsbereiche mehrere Gewichtsbereiche zugeordnet sind, die durch eine zweite Taste (Fig.1, Nr.17) auswählbar sind, indem dieser eine Ordnungsziffer ("8", "+1") zugeordnet ist.

8. Vorrichtung nach einem der Ansprüche 1 bis 7, gekennzeichnet durch einen die grundsätzliche funktionelle Belegung der Eingabemittel (Fig.1," 1-24", Fig.2) beinhaltenden ersten Datenspeicher (2), einen eine dazu untergeordnete, länderspezifische Belegung der Eingabemittel (Fig.1,"1-24", Fig.3) beinhaltenden zweiten Datenspeicher (3) und einen durch Eingabemittel der Vorrichtung programmierbaren dritten Datenspeicher (13), der die nach den Ordnungsziffern in Adressen (Fig.5) eingeordneten, posttarifgemässen Frankierwerte enthält.

9. Vorrichtung nach einem der Ansprüche 1 bis 8, dadurch gekennzeichnet, dass die Frankierwerte der Adressen mittels Eingabemitteln (Fig.1, Nr. 1-5) der Vorrichtung einprogrammierbar sind.

10. Vorrichtung nach Anspruch 9, dadurch gekennzeichnet, dass eines der Eingabemittel zum Programmieren von Frankierwerten ein in eine Schlüsselaufnahme (9) einführbarer Schlüssel ist.
